(19) **Europäisches Patentamt / European Patent Office / Office européen des brevets**

(11) **EP 4 089 971 A1**

(12) **EUROPEAN PATENT APPLICATION**
published in accordance with Art. 153(4) EPC

(43) Date of publication:
**16.11.2022 Bulletin 2022/46**

(21) Application number: **20915677.7**

(22) Date of filing: **20.01.2020**

(51) International Patent Classification (IPC):
**H04L 29/06** (2006.01)

(52) Cooperative Patent Classification (CPC):
**H04L 9/40**

(86) International application number:
**PCT/CN2020/073319**

(87) International publication number:
**WO 2021/146867 (29.07.2021 Gazette 2021/30)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **GUANGDONG OPPO MOBILE TELECOMMUNICATIONS CORP., LTD.**
**Dongguan, Guangdong 523860 (CN)**

(72) Inventor: **XU, Weijie**
**Dongguan, Guangdong 523860 (CN)**

(74) Representative: **RGTH**
**Patentanwälte PartGmbB**
**Neuer Wall 10**
**20354 Hamburg (DE)**

(54) **FREQUENCY HOPPING METHODS, ELECTRONIC DEVICE, AND STORAGE MEDIUM**

(57) Disclosed in the present application is a frequency hopping method, comprising: a terminal device receives indication information; and the terminal device transmits data in a frequency domain beyond an activated first BandWidth Part (BWP) and the first BWP in a frequency hopping manner on the basis of the indication information. Further disclosed in the present application are another frequency hopping method, an electronic device, and storage medium.

```
┌─────────────────────────────────────────────────────────┐
│ The terminal device receives the indication information │──── S201
└─────────────────────────────────────────────────────────┘
                            │
                            ▼
┌─────────────────────────────────────────────────────────┐
│ The terminal device transmits data through an active     │
│ first BWP and a frequency domain other than the first    │──── S202
│ BWP in a manner of frequency hopping based on the        │
│ indication information                                    │
└─────────────────────────────────────────────────────────┘
```

**FIG. 3**

EP 4 089 971 A1

**Description**

TECHNICAL FIELD

The present disclosure relates to the field of wireless communication technologies, and particularly, to a method and an electronic device for frequency hopping, and a storage medium.

BACKGROUND

In the New Radio (NR) system, how to improve the data transmission performance and improve the coverage of the system becomes a technical trend.

SUMMARY

An embodiment of the present disclosure provides a method and an electronic device for frequency hopping, and a storage medium, which may improve data transmission performance and the coverage of the system.
According to a first aspect, an embodiment of the present disclosure provides a method for frequency hopping. The method includes: receiving, by a terminal device, indication information;
transmitting based on the indication information, by the terminal device, data through an active first bandwidth portion (BWP) and a frequency domain other than the first BWP in a manner of frequency hopping.
According to a second aspect, an embodiment of the present disclosure provides a method for frequency hopping method. The method includes: transmitting, by a network device, indication information. The indication information is used for a terminal device to transmit data through an active first BWP and a frequency domain other than the first BWP in a manner of frequency hopping.
According to a third aspect, an embodiment of the present disclosure provides a terminal device. The terminal device includes a receiving unit and a processing unit. The receiving unit is configured to receive the indication information.
The processing unit is configured to transmit data through an active first BWP and a frequency domain other than the first BWP in a manner of frequency hopping.
According to a fourth aspect, an embodiment of the present disclosure provides a network device. The network device includes a transmission unit.
The transmission unit is configured to transmit the indication information. The indication information is used for a terminal device to transmit data through an active first BWP and a frequency domain other than the first BWP in a manner of frequency hopping.
According to a fifth aspect, an embodiment of the present disclosure provides a terminal device. The terminal device includes a processor and a memory configured to store a computer program executable on the processor.
The processor is configured to perform steps of the method for frequency hopping performed by the above terminal device when executing the computer program.
According to a sixth aspect, an embodiment of the present disclosure provides a network device. The network device includes a processor and a memory to store a computer program executable on the processor.
The processor is configured to perform steps of the method for frequency hopping performed by the above network device when executing the computer program.
According to a seventh aspect, an embodiment of the present disclosure provides a chip. The chip includes a processor configured to call and execute a computer program from a memory such that a terminal device in which the chip is arranged performs the above mentioned method for frequency hopping.
According to an eighth aspect, an embodiment of the present disclosure provides a chip. The chip includes a processor configured to call and execute a computer program from a memory such that a network device in which the chip is arranged performs the above mentioned method for frequency hopping.
According to a ninth aspect, an embodiment of the present disclosure provides a storage medium having stored an executable program that, when executed by a processor, causes the processor to perform the above mentioned method for frequency hopping performed by the terminal device.
According to a tenth aspect, an embodiment of the present disclosure provides a storage medium having stored an executable program that, when executed by a processor, causes the processor to perform the above mentioned method for frequency hopping performed by the network device.
According to an eleventh aspect, an embodiment of the present disclosure provides a computer program product. The computer program product includes a computer program instruction enables a computer to execute the above mentioned method for frequency hopping performed by the terminal device.
According to a twelfth aspect, an embodiment of the present disclosure provides a computer program product. The computer program product includes a computer program instruction enables a computer to execute the above mentioned method for frequency hopping performed by the network device.

According to a thirteenth aspect, an embodiment of the present disclosure provides a computer program that enables a computer to execute the above mentioned method for frequency hopping performed by the terminal device.

According to a fourteenth aspect, an embodiment of the present disclosure provides a computer program that enables a computer to execute the above mentioned method for frequency hopping performed by the network device.

The method for frequency hopping provided in the embodiments of the present disclosure includes: receiving, by a terminal device, indication information; and transmitting based on the indication information, by the terminal device, data through an active first bandwidth portion (BWP) and a frequency domain other than the first BWP in a manner of frequency hopping. Thus, the terminal device can transmit data between different BWPs in a manner of frequency hopping. Especially for the terminal device with narrow bandwidth, the frequency hopping transmission can be performed in a wider frequency range, thereby improving data transmission performance and the coverage of the system.

BRIEF DESCRIPTION OF THE DRAWINGS

FIG. 1 is a schematic diagram of a method for frequency hopping according to the present disclosure.

FIG. 2 is a schematic structural diagram of a communication system according to an embodiment of the present disclosure.

FIG. 3 is a schematic diagram of an optional processing flow of a method for frequency hopping applied to a terminal device according to an embodiment of the present disclosure.

FIG. 4 is a schematic diagram of a method for frequency hopping implemented based on formula (3) according to an embodiment of the present disclosure.

FIG. 5 is a first schematic diagram of a method for frequency hopping implemented based on formula (7) according to an embodiment of the present disclosure.

FIG. 6 is a schematic diagram of a method for frequency hopping implemented based on formula (8) according to an embodiment of the present disclosure.

FIG. 7 is a second schematic diagram of a method for frequency hopping implemented based on formula (7) according to an embodiment of the present disclosure.

FIG. 8 is a schematic diagram of a method for frequency hopping in which at least one symbol is reserved according to an embodiment of this disclosure.

FIG. 9 is a schematic diagram of an optional processing flow of a method for frequency hopping applied to a network device according to an embodiment of the present disclosure.

FIG. 10 is a schematic structural diagram of a terminal device according to an embodiment of the present disclosure.

FIG. 11 is a schematic structural diagram of a network device according to an embodiment of the present disclosure.

FIG. 12 is a schematic diagram of a hardware structure of an electronic device according to an embodiment of the present disclosure.

DETAILED DESCRIPTION

For a more detailed understanding of the features and technical content of the embodiments of the disclosure, the implementation of the embodiments of the disclosure will be described in detail below with reference to the accompanying drawings. The accompanying drawings are only for reference and explanation purposes, and are not intended to limit the embodiments of the disclosure.

Before describing the method for frequency hopping provided in the embodiment of the present disclosure in detail, the related art is briefly described firstly.

The Internet of Things (IOT) technology is developing rapidly with the continuous evolution and assistance of wireless communication technology. A series of standards, such as the Massive Machine Type Communication (mMTC), MTC/enhanced MTC (eMTC), and Narrow Band-IoT (NB-IOT), promoted by the 3rd Generation Partnership Project (3GPP) organization becomes the candidate technical standard for the fifth Generation (5G) mMTC technology. These technical standards are expected to play a significant role in smart homes, smart cities, smart factories, remote monitoring, smart transportation and other aspects of people's production and life.

MTC/eMTC and NB-IOT terminal devices have the technical advantages of low production cost, low price, ultra-low power consumption supported, and deep and wide coverage scenarios supported, and thus facilitate advantageously the rapid popularization of the Internet of Things technology at the early stage of development. However, these technologies also have limitations in application scenarios. For example, since the design objectives of the MTC/eMTC and the NB-IoT are to support some applications with low data rate and high transmission delay, the MTC/eMTC and the NB-IoT terminal device cannot be applied in some scenarios of Internet of Things that requires relatively high rate, such as video surveillance in intelligent security, and industrial applications requiring relatively low delay, and if the NR terminal is used directly, the design indexes of the NR terminal, such as transmission rate and transmission delay, are far beyond the actual requirements of these scenarios, and the cost is relatively high and not conducive to the market competition.

Therefore, in order to improve the terminal device system in the 5G mMTC scenario, it is necessary to design a type of NR MTC terminal device that supports medium transmission rate, medium delay requirement, and has low cost, such NR MTC type of terminal device is currently called a NR-light terminal device by the 3GPP.

Currently, the NR terminal device needs to support at least two receiving channels, and the NR terminal device on some frequency bands needs to support four receiving channels. Each receiving channel includes a receiving antenna, a filter, a Power Amplifier (PA), an Analog to Digital (AD) sampler, and other elements. Thus, the cost of the terminal can be significantly reduced by reducing the number of radio frequency channels that NR terminal device needs to be equipped with. If the terminal having two radio frequency channels is reduced to the terminal having one radio frequency channel, the cost of the chip module may be reduced by about 1/3. The NR-light terminal can therefore be equipped with a smaller number of antennas to reduce the cost of the terminal.

The NR terminal device also needs to support a wide transmission bandwidth. For example, the FR1 terminal device needs to support a bandwidth of up to 100 MHz. In order to reduce the cost of the NR-light terminal device and the power consumption of the NR-light terminal device, the NR-light terminal device may support a smaller terminal bandwidth, for example, a terminal bandwidth of only 5 MHz, 10 MHz, or 20 MHz is supported by the FR1.

In NR system, both system bandwidth and terminal bandwidth may reach hundreds of MHz or even several GHz to support high speed mobile data transmission. However, in actual data transmission, such a large bandwidth is not always required. For example, in an operation scenario where only low data rate transmission needs to be supported, for example, WeChat chatting, the terminal device only needs to adopt a smaller work bandwidth, for example, a 10 MHz bandwidth is sufficient. In order to flexibly support the different bandwidth requirements of the above different scenarios, the NR system introduces the concept of BWP. The BWP may be a part of the system bandwidth (bandwidth of the carrier of the cell). For example, the system bandwidth is 100 MHz, and the terminal device may transmit data through the system bandwidth using a bandwidth less than 100 MHz, for example, a bandwidth part of 20 MHz, or a bandwidth part of 50 MHz. The NR terminal device may be configured with up to four BWPs by higher layer signaling, and different BWPs may have different bandwidth sizes, different frequency positions, and different subcarrier spacings. The network device may enable the terminal device switch among multiple BWPs according to the service requirements of the terminal device. For example, when transmitting with a higher service rate, a BWP with a larger bandwidth is used, and when transmitting with a smaller service data rate, a BWP with a smaller bandwidth is used.

Currently, the NR system supports switching of the BWPs for the terminal device by means of Downlink Control Information (DCI), and switching based on the manner of timer or Radio Resource Control (RRC) signaling reconfiguration. Taken as an example, the DCI triggers the terminal device to perform the BWP switching: a bandwidth part indicator is carried in the DCI that performs the data scheduling for the terminal device, and the indicator field may be 0,1 or 2 bits depending on the number of BWPs configured by the network device for the terminal device. The bit length is $\lceil \log_2(n_{BWP}) \rceil$ bit.

In one case, $n_{BWP} = n_{BWP,RRC} + 1$, and if $n_{BWP,RRC} \leq 3$, in this case, the bandwidth part indicator is the same as the BWP-Id configured by the higher layer parameter.

In another case, $n_{BWP} = n_{BWP,RRC}$, and the bandwidth part indicator is illustrated in table 1 as below:

Table 1

| Value of BWP indicator field | Bandwidth part |
|---|---|
| 2 bits | |
| 00 | First BWP configured by higher layer signaling |

(continued)

| Value of BWP indicator field | Bandwidth part |
|---|---|
| 2 bits | |
| 01 | Second BWP configured by higher layer signaling |
| 10 | Third BWP configured by higher layer signaling |
| 11 | Fourth BWP configured by higher layer signaling |

When the BWP of the terminal device needs to be switched, the network device indicates, in the BWP indicator field in the DCI transmitted to the terminal device, a BWP different from the BWP in which the terminal device is currently located, and the terminal device performs BWP switching after receiving the BWP indicator.

To improve the frequency selective gain of the uplink transmission and the coverage of the system, the Physical Uplink Shared Channel (PUSCH) and the Physical Uplink Control Channel (PUCCH) of the NR system support frequency hopping transmission.

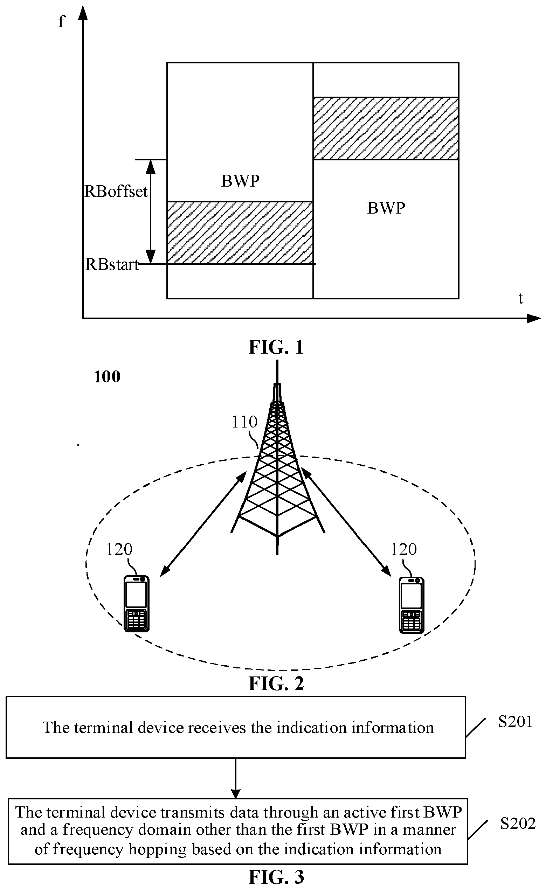

Taking PUSCH as an example, when the PUSCH scheduled by the DCI use the first resource allocation type, the PUSCH transmission supports intra-slot frequency hopping and inter-slot frequency hopping. A schematic diagram of the method for frequency hopping of the present disclosure is illustrated as in FIG. 1, herein the starting PRB of each hop is determined based on the following formula:

$$RB_{start} = \begin{cases} RB_{start} & i=0 \\ \left(RB_{start} + RB_{offset}\right) \bmod N_{BWP}^{size} & i=1 \end{cases} \tag{1}$$

where i=0 and i=1 denote a first hop and a second hop, respectively, $RB_{start}$ is the starting Physical Resource Block (PRB) for the uplink BWP transmission of the PUSCH, and is indicated by the uplink grant based on the first resource allocation type, and $RB_{offset}$ is the frequency offset between two hops, and is represented by the number of PRBs.

For the configured intra-slot frequency hopping, the number of symbols of the first hop is $\left\lfloor N_{symb}^{PUSCH,s} / 2 \right\rfloor$, and the number of symbols of the second hop is $N_{symb}^{PUSCH,s} - \left\lfloor N_{symb}^{PUSCH,s} / 2 \right\rfloor$, where $N_{symb}^{PUSCH,s}$ is the number of Orthogonal Frequency Division Multiplexing (OFDM) symbols allocated for the PUSCH transmission in one slot.

For the configured inter-slot frequency hopping, the starting PRB at slot $n_s^{\mu}$ is:

$$RB_{start}\left(n_s^{\mu}\right) = \begin{cases} RB_{start} & n_s^{\mu} \bmod 2 = 0 \\ \left(RB_{start} + RB_{offset}\right) \bmod N_{BWP}^{size} & n_s^{\mu} \bmod 2 = 1 \end{cases} \tag{2}$$

where $n_s^{\mu}$ is the serial number of the current slot on which the multi-slots PUSCH transmission is located in the radio frame, $RB_{start}$ is the starting PRB allocated to the PUSCH transmission in the uplink BWP, and is indicated by the uplink grant based on the first resource allocation type, and $RB_{offset}$ is the frequency offset between two hops, and is represented by the number of PRBs.

Similarly, for the transmission of PUCCH in a manner of frequency hopping, the terminal device determines the PRB index of the first hop for the PUCCH transmission as $RB_{BWP}^{offset} + \left\lfloor r_{PUCCH} / N_{CS} \right\rfloor$ and determines the PRB index of the second hop as $N_{BWP}^{size} - 1 - RB_{BWP}^{offset} - \left\lfloor r_{PUCCH} / N_{CS} \right\rfloor$, where $N_{CS}$ is the total number of the cycles shift.

In the NR system, research is devoted to improving the data transmission performance and the coverage of the system. During the implementation of the program, the applicant found that the transmission performance is low when some terminal devices perform data transmission, and that the coverage of the system is low due to a low frequency hopping gain caused by a small bandwidth of the terminal device. The reasons are as follows. the data transmission of the NR-light terminal also needs to be performed in a manner of frequency hopping to enhance the data transmission performance. However, the NR-light terminal has some natural limitations for frequency hopping transmission. For example, the frequency hopping transmission of both PUSCH and PUCCH is performed within the uplink BWP configured for the terminal device. However, some NR-light terminals only support rather small terminal bandwidth, such as 5 MHz. Thus the bandwidth of the BWP allocated to the terminal device is also limited to be within the terminal bandwidth, and the bandwidth of the BWP is less than or equal to 5 MHz. Since the frequency hopping technology requires sufficient frequency spacing between the transmission band before the frequency hopping and the transmission band after the frequency hopping to obtain a significant frequency hopping gain, the desired frequency hopping gain will not be brought in the case that the frequency hopping is performed within such a small bandwidth. Therefore, the applicant found that the data transmission performance and the coverage of the system can only be improved by increasing the frequency hopping gain of the narrow-bandwidth terminal.

An embodiment of the present application provides a method for frequency hopping. The method for frequency hopping of the embodiment of the present disclosure may be applied to various communication systems, for example, a Global System for Mobile Communications (GSM), a Code Division Multiple Access (CDMA) system, a Wideband Code Division Multiple Access (WCDMA) system, a General Packet Radio Service (GPRS), a Long Term Evolution (LTE) system, an LTE Frequency Division Duplex (FDD) system, an LTE Time Division Duplex (TDD) system, an Advanced Long Term Evolution (LTE-A) system, a New Radio (NR) system, an Evolution System of the NR system, an LTE-based access to unlicensed spectrum (LTE-U) system, an NR-based access to unlicensed spectrum (NR-U) system, a Universal Mobile Telecommunications System (UMTS), a Worldwide Interoperability for Microwave Access (WiMAX) communication system, Wireless Local Area Networks (WLANs), Wireless Fidelity (WIFs), next-generation communication systems, or other communication systems.

Generally, a conventional communication system supports a limited number of connections and is also easy to be implemented. However, with the development of the communication technology, a mobile communication system will support not only conventional communication, but also, for example, device-to-device (D2D) communication, machine-to-machine (M2M) communication, machine type communication (MTC), and vehicle-to-vehicle (V2V) communication. Embodiments of the present disclosure may also be applied to these communication systems.

The system architecture and service scenarios described in the embodiments of this disclosure are intended to illustrate the technical solutions of the embodiments of the disclosure more clearly, and will not limit the technical solutions provided in the embodiments of the disclosure. Those of ordinary skilled in the art will know that the technical solutions provided in the embodiments of the disclosure are also applicable for similar technical problems with the evolution of the network architecture and the emergence of new service scenarios.

The network device involved in the embodiments of the present disclosure may be conventional base station (e.g., NodeB or eNB or gNB), new radio controller (NR controller), centralized unit, new radio base station, radio remote module, micro base station, relay, distributed unit, Transmission Reception Point (TRP), transmission point (TP), or any other devices. The embodiments of the present disclosure do not limit the specific technology and the specific form used by the network device. For convenience of description, in all embodiments of the present disclosure, the above-mentioned devices for providing the wireless communication function for the terminal device are collectively referred to as a network device.

In the embodiment of the present disclosure, the terminal device may be any terminal. For example, the terminal device may be a user equipment of machine type communication. That is, the terminal device may also be referred to as a user equipment, a mobile station (MS), a mobile terminal, a terminal, etc. The terminal device may communicate with one or more core networks via a radio access network (RAN). For example, the terminal device may be a mobile phone (also referred to as a "cellular" phone), a computer having a mobile terminal, etc. For example, the terminal device may also be a portable, pocket-sized, handheld, computer built-in, or vehicle-mounted mobile device, which exchange language and/or data with the radio access network. No specification limitations are made in the embodiments of the present disclosure.

Optionally, the network device and the terminal device may be deployed on land, including indoor or outdoor, handheld, or in-vehicle; may also be deployed on the water surface; and may also be deployed on airplanes, balloons and artificial satellites in the air. Embodiments of the present disclosure do not limit the application scenarios of the network device and the terminal device.

Optionally, the communication between the network device and the terminal device and the communication between the terminal device and the terminal device may be performed through the licensed spectrum, may also be performed through the unlicensed spectrum, and may also be performed through the licensed spectrum and the unlicensed spectrum at the same time. The communication between the network device and the terminal device and the communication between the terminal device and the terminal device may be performed through a frequency spectrum less than or equal to seven gigahertz (7 GHz), and may be performed through a frequency spectrum greater than or equal to 7 GHz, and may be performed through the frequency spectrum less than or equal to 7 GHz and the frequency spectrum greater than or equal to 7 GHz at the same time. The frequency spectrum resources used between the network device and the terminal device is not limited in the embodiments of the present disclosure.

Generally, a conventional communication system supports a limited number of connections and is also easy to be implemented. However, with the development of the communication technology, a mobile communication system will support not only conventional communication, but also, for example, D2D communication, M2M communication, MTC, and V2V communication. Embodiments of the present disclosure may also be applied to these communication systems.

For example, the communication system 100 applied to the embodiments of the present disclosure is illustrated as in FIG. 2. The communication system 100 may include a network device 110, and the network device 110 may be a device communicating with a terminal device 120 (or referred to as a communication terminal or a terminal). The network device 110 may provide communication coverage for a specific geographic area and may communicate with the terminal devices located within the coverage. Optionally, the network device 110 may be a Base Transceiver Station (BTS) in a GSM system or a CDMA system, may also be a NodeB (NB) in a WCDMA system, and may further be an Evolutional Node B (eNB or eNodeB) in the LTE system or a wireless controller in a Cloud Radio Access Network (CRAN). Or the network device may be a mobile switching center, a relay station, an access point, a vehicle-mounted device, a wearable device, a hub, a switch, a network bridge, a router, a network-side device in 5G network, a network device in a future evolutionary Public Land Mobile Network (PLMN), etc.

The communication system 100 further includes at least one terminal device 120 within the coverage of the network device 110. As used herein, the "terminal device" includes, but is not limited to, being connected via a wireline, for example, being connected via a Public Switched Telephone Networks (PSTN), a Digital Subscriber Line (DSL), a digital cable, and a direct cable; and/or another data connection/network; and/or being connected via a wireless interface, for example, being connected via a cellular network, a Wireless Local Area Network (WLAN), a digital TV network such as a DVB-H network, a satellite network, an Amplitude Modulation-Frequency Modulation (AM-FM) broadcast transmitter; and/or an equipment of another terminal device, wherein the equipment is configured to receive/transmit a communication signal; and/or an IoT device. The terminal device configured to communicate through a wireless interface may be referred to as a "wireless communication terminal", a "wireless terminal" or a "mobile terminal". Examples of the mobile terminal include, but are not limited to, a satellite phone or a cellular phone; a Personal Communications System (PCS) terminal that may combine the cellular radio phone with data processing, fax, and data communication; a Personal Digital Assistant (PDA) that may include radio telephone, pager, Internet/intranet access, Web browser, memo pad, calendar, and/or Global Positioning System (GPS) receiver; and a conventional laptop and/or a palmtop receiver or other electronic devices including radio telephone transceiver. The terminal device may refer to an access terminal, a UE, a user unit, a user station, a mobile station, a mobile platform, a remote station, a remote terminal, a mobile device, a user terminal, a terminal, a wireless communication device, a user agent or a user device. The access terminal may be a cell phone, a cordless phone, a Session Initiation Protocol (SIP) phone, a Wireless Local Loop (WLL) station, a PDA, a handheld device with a wireless communication function, a computing device, another processing device connected to a wireless modem, a vehicle-mounted device, a wearable device, a terminal device in 5G network, a terminal device in the future evolutionary PLMN or the like.

Optionally, the terminal device 120 may perform D2D communication therebetween.

Optionally, the 5G system or 5G network may also be referred to as a New Radio system or an NR network.

As illustrated in FIG. 3, an optional processing flow of the method for frequency hopping applied to the terminal device according to an embodiment of the disclosure includes steps S201 to S202.

At step S201, the terminal device receives the indication information.

In some embodiments, the terminal device receives the indication information transmitted by the network device, and the indication information may be carried in at least one of: a RRC signaling, a Media Access Control Control Element (MAC CE), or a DCI.

In some embodiments, the indication information is used to indicate the serial number of the starting PRB for the first hop transmission of the terminal device in the first BWP.

At step S202, the terminal device transmits data through an active first BWP and a frequency domain other than the first BWP in a manner of frequency hopping based on the indication information.

The data transmission performed by the terminal device in a manner of frequency hopping may occur in a slot, i.e. intra-slot frequency hopping. The data transmission performed by the terminal device in the manner of frequency hopping may occur between the slots, i.e., inter-slot frequency hopping.

The PUSCH transmission is taken as an example in the following, and the method for frequency hopping provided in the embodiments of the disclosure is described based on the intra-slot frequency hopping and inter-slot frequency hopping, respectively.

1) For the scenario of intra-slot frequency hopping, and that the terminal device performs the first hop transmission in the first BWP and performs the second hop transmission in the frequency domain other than the first BWP

In some embodiments, the starting PRB for the second hop transmission in the frequency domain other than the first BWP is: the sum of the starting PRB for the first hop transmission of the terminal device in the first BWP and the second frequency domain offset, as illustrated in the following formula:

$$RB_{start,FH} = \begin{cases} RB_{start} & i = 0 \\ RB_{start} + RB_{offset} & i = 1 \end{cases} \tag{3}$$

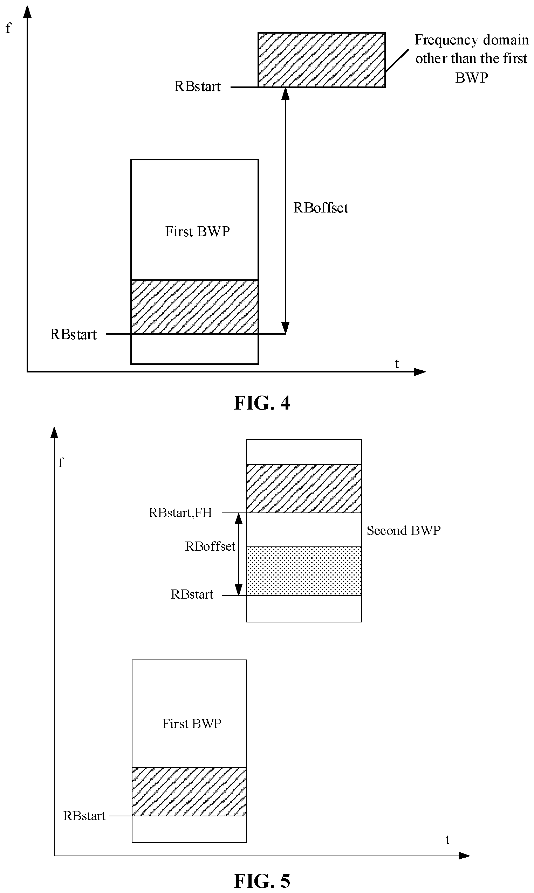

The schematic diagram of a method for frequency hopping implemented based on the formula (3) is illustrated as in FIG. 4. $RB_{start,FH}$ is the serial number of the starting PRB for the second hop transmission in the frequency domain other than the first BWP. $RB_{start}$ is the serial number of the starting PRB for the first hop transmission in the first BWP. $RB_{offset}$ is the second frequency domain offset. $i = 0$ denotes the first hop and $i = 1$ denotes the second hop.

In some other embodiments, the starting PRB for the second hop transmission is the PRB corresponding to a value obtained by performing modulo operation on the number of PRBs within a carrier with a sum of the starting PRB for the first hop transmission of the terminal device in the first BWP and the second frequency domain offset, as illustrated in the following formula:

$$RB_{start,FH} = \begin{cases} RB_{start} & i = 0 \\ (RB_{start} + RB_{offset}) \bmod N_{carrier}^{size} & i = 1 \end{cases} \tag{4}$$

The value obtained by performing modulo operation on the number of PRBs within a carrier with a sum of the starting PRB for the first hop transmission of the terminal device in the first BWP and the second frequency domain offset may be the serial number of the PRB within the range of the carrier, and the serial number of PRB corresponds to the PRB.

Herein, $N_{carrier}^{size}$ denotes the number of PRBs within the carrier, $RB_{start,FH}$ denotes the serial number of the starting PRB for the second hop transmission within the frequency domain other than the first BWP, $RB_{start}$ denotes the serial number of the starting PRB for the first hop transmission in the first BWP, $RB_{offset}$ denotes the second frequency domain offset, $i = 0$ denotes the first hop, and $i = 1$ denotes the second hop.

In this way, the frequency hopping transmission of the terminal device may be limited within the system bandwidth by performing modulo operation on the number of PRBs within a carrier with a sum of the starting PRB for the first hop transmission of the terminal device in the first BWP and the second frequency domain offset, thereby limiting the frequency band range of the frequency hopping transmission of the terminal device.

In some other embodiments, the starting PRB for the second hop transmission is: a PRB corresponding to a sum of: a value, which is obtained by performing modulo operation on the number of PRBs included in the first BWP with a sum for the starting PRB for the first hop transmission of the terminal device in the first BWP and a third frequency domain offset; and a fourth frequency domain offset, as illustrated in the following formula:

$$RB_{start,FH} = \begin{cases} RB_{start} & i = 0 \\ (RB_{start} + RB_{offset}) \bmod N_{BWP_1}^{size} + RB_{offset2} & i = 1 \end{cases} \tag{5}$$

where $RB_{start,FH}$ is the serial number of the starting PRB for the second hop transmission within a frequency domain other than the first BWP, $RB_{start}$ is the serial number of the starting PRB for the first hop transmission in the first BWP, $RB_{offset}$ is the third frequency domain offset, $RB_{offset2}$ is the fourth frequency domain offset, $N_{BWP_1}^{size}$ denotes the number of PRBs included in the first BWP, $i = 0$ denotes the first hop, and $i = 1$ denotes the second hop.

In some other embodiments, the starting PRB for the second hop transmission is: a PRB corresponding to a value obtained by performing modulo operation on a number of PRBs within a carrier with a sum of: PRB corresponding to a value, which is obtained by performing modulo operation on a number of PRBs comprised in the first BWP with a sum of the starting PRB for the first hop transmission of the terminal device in the first BWP and a third frequency domain offset; and a fourth frequency domain offset, as illustrated in the following formula:

$$RB_{\text{start,FH}} = \begin{cases} RB_{\text{start}} & i = 0 \\ \left(\left(RB_{\text{start}} + RB_{\text{offset}}\right) \bmod N_{BWP_1}^{size} + RB_{offset2}\right) \bmod N_{carrier}^{size} & i = 1 \end{cases} \qquad (6)$$

where $N_{carrier}^{size}$ denotes the number of PRBs within the carrier, $RB_{\text{start,FH}}$ denotes the serial number of the starting PRB for the second hop transmission within the frequency domain other than the first BWP, $RB_{\text{start}}$ denotes the serial number of the starting PRB for the first hop transmission in the first BWP, $RB_{offset}$ denotes the third frequency domain offset, $RB_{offset2}$ denotes the fourth frequency domain offset, $N_{BWP_1}^{size}$ denotes the number of PRBs included in the first BWP, $i = 0$ denotes the first hop, and $i = 1$ denotes the second hop.

2) For the scenario of intra-slot frequency hopping, and that the terminal device performs the first hop transmission in the first BWP and performs the second hop transmission in the second BWP, and the second BWP being part of the frequency domain other than the first BWP

In some embodiments, the second BWP is any one of: any one of BWPs configured by a network device for the terminal device other than the first BWP; any one of a plurality of BWPs for data transmission configured by the network device for the terminal device; one BWP of a subset of a set of BWPs, the set of BWPs including a plurality of BWPs configured by the network device for the terminal device for data transmission; or one BWP of a set of BWPs configured by the network device for the terminal device for data transmission in the manner of frequency hopping. It is to be understood that both the first BWP and the second BWP are BWPs configured by the network device for the terminal device in the related art, the first BWP is a current active BWP, and the second BWP is a BWP different from the first BWP. The parameters of the first BWP and the parameters of the second BWP, such as the bandwidth size (the number of PRBs included) and the subcarrier spacing, may be the same or different, or may be partially the same or partially different.

In specific implementation, the index of the second BWP may be preconfigured by the network device. For example, the index of the second BWP is carried in at least one of: the RRC signaling, the MAC CE, or the DCI. The index of the second BWP may also satisfy a predefined first corresponding relationship with the index of the first BWP. For example, the index of the second BWP = (the index of the first BWP+1)/4, where / is a modulo operation. The index of the second BWP can be determined according to the first corresponding relationship and the index of the first BWP, and then the second BWP corresponding to the second hop transmission can be determined.

The serial number of the starting PRB for the second hop transmission in the second BWP may be a value obtained by performing a modulo operation on a number of PRBs included in the second BWP with a sum of a serial number of the starting PRB for the first hop transmission of the terminal device in the first BWP and a first frequency domain offset, as illustrated in the following formula:

$$RB_{\text{start,FH}} = \begin{cases} RB_{\text{start}} & i = 0 \\ \left(RB_{\text{start}} + RB_{\text{offset}}\right) \bmod N_{BWP2}^{size} & i = 1 \end{cases} \qquad (7)$$

The schematic diagram of a method for frequency hopping implemented based on the formula (7) is illustrated as in FIG. 5. $RB_{\text{start,FH}}$ is the serial number of the starting PRB for the second hop transmission in the second BWP, $RB_{\text{start}}$ is the serial number of the starting PRB for the first hop transmission in the first BWP, $RB_{offset}$ is the first frequency domain offset, $N_{BWP2}^{size}$ is the number of PRBs included in the second BWP, $i = 0$ denotes the first hop, and $i = 1$ denotes the second hop.

The serial number of the starting PRB for the second hop transmission in the second BWP may also be the serial number of the starting PRB for the first hop transmission of the terminal device in the first BWP, as illustrated in the following formula:

$$RB_{\text{start,FH}} = RB_{\text{start}}, i = 0, 1 \qquad (8)$$

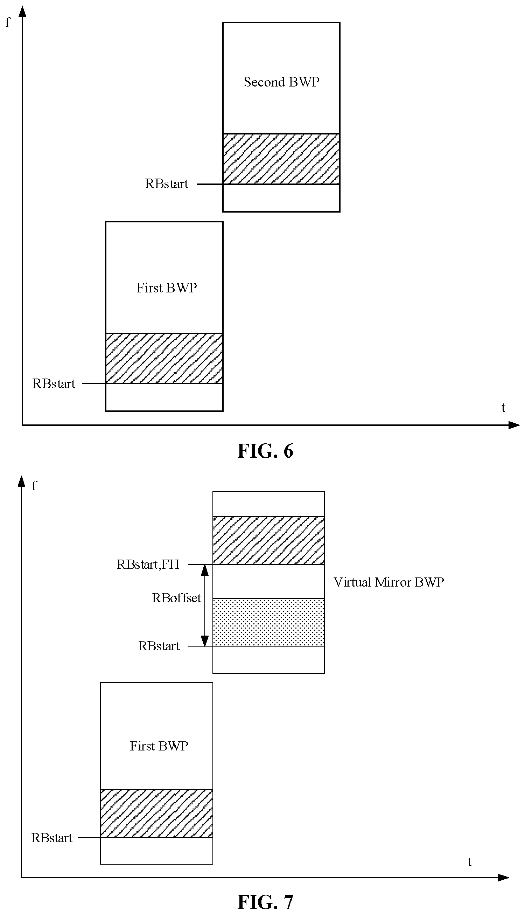

The schematic diagram of the method for frequency hopping implemented based on the formula (8) is illustrated as in FIG. 6. Regardless of the first hop transmission of the terminal device in the first BWP or the second hop transmission of the terminal device in the second BWP, the serial number of the starting PRBs for transmission within the two BWPs is the serial number of the starting PRB indicated based on the uplink grant: $RB_{start}$.

In some other embodiments, the second BWP is a virtual mirror BWP having a second corresponding relationship with the first BWP. The virtual image BWP is used for data transmission in the manner of frequency hopping.

In specific implementation, the virtual image BWP is configured by the network device, and is different from the four BWPs configured by the network device for the terminal device in the related art. The virtual image BWP may have a different frequency domain than the first BWP. For example, the virtual image BWP and the corresponding BWP meet a certain frequency relationship and have a certain frequency interval. The virtual image BWP and the corresponding BWP may have the same parameters of bandwidth, subcarrier spacing, etc. Alternatively, the virtual image BWP and the corresponding BWP have different or partially different parameters of bandwidth, subcarrier spacing, etc.

For example, on the basis of one BWP, the network device may configure the virtual image BWP for the BWP. For example, the configuration of the virtual image BWP is obtained by configuring the frequency relationship between the virtual image BWP and the one BWP, such as the frequency position, and other parameters other than the frequency position are the same. Alternatively, the network device configures another BWP as the virtual mirror BWP via RRC signaling for the one BWP.

In a scenario in which the second BWP is the virtual image BWP, the process of obtaining the serial number of the starting PRB for the second hop transmission in the second BWP may be illustrated as in the above formula (7) and formula (8). The second schematic diagram of a method for frequency hopping implemented based on formula (7) is illustrated as in FIG. 7.

3) For the inter-slot frequency hopping, the terminal device performs a first hop transmission within a first BWP and performs a second hop transmission in a frequency domain other than the first BWP; alternatively, the terminal device may also perform the second hop transmission in the frequency domain other than the first BWP. Herein the second BWP may be the virtual image BWP as mentioned in Scenario 2) or the second BWP as mentioned in Scenario 1).

In specific implementation, the serial number of the starting PRB for the second hop transmission in the transmission slot corresponding to the second BWP in the second BWP is a value obtained by performing a modulo operation on a number of PRBs included in the second BWP with a sum of a number of a starting PRB for the first hop transmission in the first BWP and a fifth frequency domain offset, and the value of performing modulo operation on a slot number of a slot being transmitted currently and 2 is 1, as illustrated in following Formula (9):

$$
RB_{start}\left(n_s^{\mu}\right) = \begin{cases} RB_{start} & n_s^{\mu} \bmod 2 = 0 \\ (RB_{start} + RB_{offset}) \bmod N_{BWP2}^{size} & n_s^{\mu} \bmod 2 = 1 \end{cases} \tag{9}
$$

where $n_s^{\mu}$ is the serial number of the current slot on which the multi-slots PUSCH transmission is located in the radio frame, $RB_{start}$ is the serial number of the starting PRB for the first hop transmission in the first BWP, $RB_{offset}$ is the fifth frequency domain offset, and $N_{BWP2}^{size}$ is the number of PRBs included in the second BWP.

Alternatively, the serial number of the starting PRB for the second hop transmission in the transmission slot corresponding to the second BWP in the second BWP is a serial number of a starting PRB of for the first hop transmission of the terminal device in the first BWP, and the value of performing modulo operation of a slot number of a slot being transmitted currently and 2 is 1, as illustrated in the following Formula (10):

$$
RB_{start}\left(n_s^{\mu}\right) = \begin{cases} RB_{start} & n_s^{\mu} \bmod 2 = 0 \\ RB_{start} & n_s^{\mu} \bmod 2 = 1 \end{cases} \tag{10}
$$

where $n_s^{\mu}$ is the serial number of the current slot on which the multi-slots PUSCH transmission is located in the radio

frame, and RB$_{start}$ is the serial number of the starting PRB for the first hop transmission in the first BWP.

The first hop transmission and the second hop transmission of the terminal device are described in detail above, and the frequency hopping method provided in the embodiments of the present disclosure is further applicable to the third hop transmission performed by the terminal device or the transmission after the third hop transmission. Taken as an example, for the scenario of inter-slot frequency hopping, the terminal device performs the first-hop transmission, the second-hop transmission, and the third-hop transmission, a brief description is made as below.

In the second BWP, the serial number of the starting PRB for the second hop transmission in the transmission slot corresponding to the second BWP is: a value obtained by a value obtained by performing a modulo operation on the number of PRBs included in the second BWP with a sum of a serial number of a starting PRB for the first hop transmission in the first BWP and a fifth frequency domain offset; and the value of performing modulo operation on a slot number of a slot being transmitted currently and 3 is 1.

The serial number of the starting PRB for the third hop transmission in the transmission slot corresponding to the third BWP is: a value obtained by performing a modulo operation on a number of PRBs included in the third BWP with a sum of a serial number of a starting PRB for the first hop transmission in the first BWP and a fifth frequency domain offset; and the value of performing modulo operation on a slot number of a slot being transmitted currently and 3 is 1; as illustrated in the following formula (11):

$$
RB_{start}\left(n_s^{\mu}\right) = \begin{cases} RB_{start} & n_s^{\mu} \bmod 3 = 0 \\ (RB_{start} + RB_{offset}) \bmod N_{BWP_2}^{size} & n_s^{\mu} \bmod 3 = 1 \\ (RB_{start} + RB_{offset}) \bmod N_{BWP_3}^{size} & n_s^{\mu} \bmod 3 = 2 \end{cases} \tag{11}
$$

Herein $n_s^{\mu}$ is the serial number of the current slot on which the multi-slots PUSCH transmission is located in the radio frame, RB$_{start}$ is the serial number of the starting PRB for the first hop transmission in the first BWP, $RB_{offset}$ is the sixth frequency domain offset, and $N_{BWP2}^{size}$ is the number of PRBs included in the second BWP, and $N_{BWP3}^{size}$ is the number of PRBs included in the third BWP. The frequency offset for the second hop transmission and the frequency offset for the third hop transmission may be the same or different.

It should be noted that, in the above mentioned embodiments of the present disclosure, the first BWP is the current activate BWP, RB$_{start}$ may be indicated by the network device in the manner of the first resource allocation type, RB$_{start}$ may be determined based on the bandwidth of the first BWP; $RB_{offset}$ and $RB_{offset2}$ are also indicated to the terminal device by the network device. RB$_{start}$, $RB_{offset}$ and $RB_{offset2}$ may be carried in the same indication information, or may be carried in different indication information.

In the above mentioned embodiments of the present disclosure, since the terminal performs frequency hopping among a plurality of BWPs, a certain frequency modulation time is required between the transmission of two hops. Therefore, a certain number of symbols may be reserved between two hops for terminal frequency modulation. That is, at least one symbol is reserved between the first hop transmission and the second hop transmission with that the terminal device transmits data in a manner of frequency hopping. At least one symbol is used for frequency modulation of the terminal device.

In specific implementation, at least one symbol may be within the symbols of the first hop transmission. Alternatively, at least one symbol may be within the symbols of the second hop transmission. Alternatively, in the case where the number of reserved symbols is greater than one, both the symbols of the first hop transmission and the symbols of the second hop transmission include the reserved symbols.

For example, the first hop transmission includes eight symbols, the first hop transmission occupies six symbols during the data transmission, and the reserved two symbols for frequency modulation may be located within two symbols of the eight symbols of the first-hop transmission in which no data is transmitted. It can be understood that the number of symbols of the first hop transmission includes N, and the first hop transmission occupies M symbols during the data transmission, 1≤M≤N.

Herein the number of the at least one symbol is at least one of: predefined, configured by the network device, or the number corresponding to the capabilities of the terminal device. For example, the number of the at least one symbol is the value corresponding to the capability of the terminal device and predefined. Alternatively, the number of the at least one symbol is a value corresponding to the capability of the terminal device and configured by the network device. The value corresponding to the capability of the terminal device may be the number supported by the terminal device.

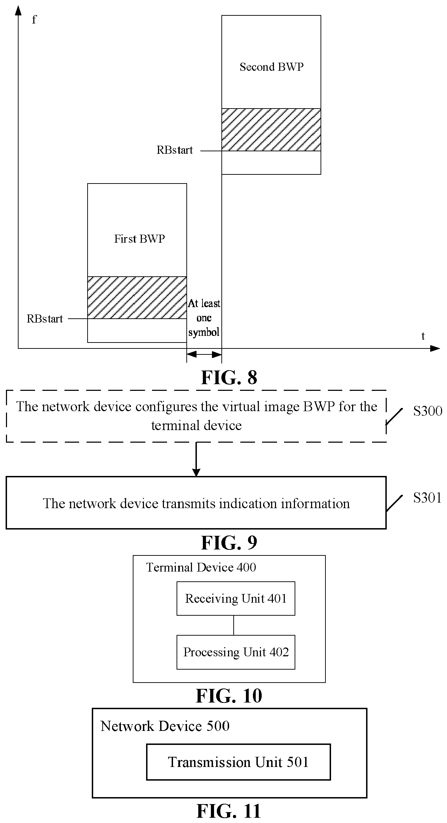

The schematic diagram of a method for frequency hopping in which at least one symbol is reserved is illustrated as in FIG. 8. Compared with the frequency hopping method in which no symbol is reserved as illustrated in FIG. 6, there is an interval between the first BWP and the second BWP in the time domain.

Taking the PUCCH transmission as an example, the terminal device determines that the PRB index for the first hop of the PUCCH transmission is $RB_{\mathrm{BWP}}^{\mathrm{offset}} + \lfloor r_{\mathrm{PUCCH}}/N_{\mathrm{CS}} \rfloor$, and determines that the PRB index for the second hop of the PUCCH transmission is $RB_{\mathrm{BWP2}}^{\mathrm{offset}} + \lfloor r_{\mathrm{PUCCH}}/N_{\mathrm{CS}} \rfloor$ or $N_{\mathrm{BWP2}}^{\mathrm{size}} - 1 - RB_{\mathrm{BWP2}}^{\mathrm{offset}} - \lfloor r_{\mathrm{PUCCH}}/N_{\mathrm{CS}} \rfloor$. Herein the PRB index for the second hop is the PRB index for the second hop transmission in the second BWP, $N_{\mathrm{CS}}$ is the total number of cycles shift, $r_{\mathrm{PUCCH}}$ is the index number of the PUCCH resource, and $RB_{\mathrm{BWP2}}^{\mathrm{offset}}$ is the frequency offset, $RB_{\mathrm{BWP}}^{\mathrm{offset}}$ and $RB_{\mathrm{BWP2}}^{\mathrm{offset}}$ may be the same or different; and $N_{\mathrm{BWP2}}^{\mathrm{size}}$ is the number of PRBs included in the second BWP.

It should be noted that the PUSCH and PUCCH are taken as an example to describe the frequency hopping method provided in the embodiments of the present disclosure. The frequency hopping method provided in the embodiments of the present disclosure may be further applied to a downlink traffic channel, such as a PUSCH and a Physical Downlink Control Channel (PDCCH). Therefore, It is to be understood that, in the embodiments of the present disclosure, the data transmitted by the terminal device in the manner of frequency hopping may be service data, or may be data related to the control information.

As illustrated in FIG. 9, an optional processing flow applied to the frequency hopping method applied to the network device according to an embodiment of the present disclosure includes step S301.

At step S301, the network device transmits indication information. The indication information is used for a terminal device to transmit data through an active first BWP and a frequency domain other than the first BWP in a manner of frequency hopping.

In an embodiment of the disclosure, the description of the indication information, the first BWP, and the frequency domain other than the second BWP is the same as the related description in the embodiment as illustrated in FIG. 3, and will not be elaborated herein.

The frequency hopping method provided in the embodiments of the present disclosure may further include step 300.

At step 300, the network device configures the virtual image BWP for the terminal device.

In the embodiment of the present disclosure, the description of the virtual image is the same as that in the embodiment illustrated in FIG. 3, and will not be elaborated herein.

It is to be understood that, in the various embodiments of the present disclosure, the serial number of each process does not imply the execution order, and the execution order of each process should be determined by its function and internal logic, and should not constitute any limitation on the implementation process of the embodiments of the present disclosure.

To implement the method for frequency hopping according to the embodiments of the present disclosure, an embodiment of the present disclosure provides a terminal device. As illustrated in FIG. 10, the composition structure of the terminal device 400 includes a receiving unit 401 and a processing unit 402.

The receiving unit 401 is configured to receive the indication information.

The processing unit 402 is configured to transmit data through an active first BWP and a frequency domain other than the first BWP in a manner of frequency hopping.

In some embodiments, the indication information is used to indicate the serial number of a starting PRB for a first hop transmission of the terminal device in the first BWP.

In some embodiments, the frequency domain other than the first BWP includes a second BWP.

In some embodiments, any one of BWPs configured by a network device for the terminal device other than the first BWP;

any one of a plurality of BWPs for data transmission configured by the network device for the terminal device;

one BWP of a subset of a set of BWPs, the set of BWPs including a plurality of BWPs configured by the network device for the terminal device for data transmission;

one BWP of a set of BWPs configured by the network device for the terminal device for data transmission in the manner of frequency hopping.

In some embodiments, the index of the second BWP is preconfigured by the network device.

In some embodiments, the index of the second BWP is carried in at least one of: the RRC signaling, the MACCE, or the DCI.

In some embodiments, the index of the second BWP and the index of the first BWP satisfy a first corresponding relationship.

In some embodiments, the second BWP is a virtual mirror BWP having a second corresponding relationship with the first BWP. The virtual image BWP is used for data transmission in the manner of frequency hopping.

In some embodiments, the virtual image BWP has a different frequency domain than the first BWP.

In some embodiments, the virtual image BWP is configured by a network device.

In some embodiments, the processing unit 402 is configured to perform a second hop transmission in the second BWP.

In some embodiments, the serial number of a starting PRB for the second hop transmission in the second BWP is: a value obtained by performing a modulo operation on a number of PRBs included in the second BWP with a sum of a serial number of the starting PRB for the first hop transmission of the terminal device in the first BWP and a first frequency domain offset.

In some embodiments, the serial number of the starting PRB for the second hop transmission in the second BWP is: the serial number of the starting PRB for the first hop transmission of the terminal device in the first BWP.

In some embodiments, the processing unit 402 is configured to perform a second hop transmission in the frequency domain other than the first BWP.

In some embodiments, the serial number of a starting PRB for the second hop transmission in the frequency domain other than the first BWP is: the sum of a serial number of a starting PRB for a first hop transmission of the terminal device in the first BWP and a second frequency domain offset.

In some embodiments, the starting PRB for the second hop transmission is: a PRB corresponding to a value obtained by performing modulo operation on a number of PRBs within a carrier with a sum of the starting PRB for the first hop transmission of the terminal device in the first BWP and the second frequency domain offset.

In some embodiments, the starting PRB for the second hop transmission is: a PRB corresponding to a sum of: a value, which is obtained by performing modulo operation on a number of PRBs included in the first BWP with a sum of the starting PRB for the first hop transmission of the terminal device in the first BWP and a third frequency domain offset; and a fourth frequency domain offset.

In some embodiments, the starting PRB for the second hop transmission is: a value obtained by performing modulo operation on a number of PRBs within a carrier with a sum of: a value, which is obtained by performing modulo operation on a number of PRBs included in the first BWP with a sum of the starting PRB for the first hop transmission of the terminal device in the first BWP and a third frequency domain offset; and a fourth frequency domain offset.

In some embodiments, the serial number of the starting PRB for the second hop transmission in a transmission slot corresponding to the second BWP in the second BWP is: a value obtained by performing a modulo operation on a number of PRBs included in the second BWP with a sum of a number of a starting PRB for the first hop transmission in the first BWP and a fifth frequency domain offset. The value of performing modulo operation on a slot number of a slot being transmitted currently and 2 is 1.

In some embodiments, the serial number of the starting PRB for the second hop transmission in a transmission slot corresponding to the second BWP in the second BWP is: the serial number of a starting PRB for the first hop transmission of the terminal device in the first BWP. The value of performing modulo operation of a slot number of a slot being transmitted currently and 2 is 1.

In some embodiments, at least one symbol is reserved between a first hop transmission and a second hop transmission with that the terminal device performs data transmission in the manner of frequency hopping. The at least one symbol is used for frequency modulation of the terminal device.

In some embodiments, the at least one symbol is within symbols of the first hop transmission; or the at least one symbol is within symbols of the second hop transmission.

In some embodiments, when the number of reserved symbols is greater than one, both the symbols of the first hop transmission and the symbols of the second hop transmission include the reserved symbols.

In some embodiments, the number of the at least one symbol is obtained by at least one of: a predefined number, a number configured by the network device, or a number corresponding to a capability of the terminal device.

In some embodiments, the indication information is carried in at least one of the RRC signaling, the MAC CE, or the DCI.

To implement the method for frequency hopping according to the embodiment of the present disclosure, an embodiment of the present disclosure provides a network device. As illustrated in FIG. 11, the composition structure of the network device 500 includes a transmission unit 501.

The transmitting unit 501 is configured to transmit indication information. The indication information is used for a terminal device to transmit data through an active BWP and a frequency domain other than the first BWP in a manner of frequency hopping.

In some embodiments, the indication information is used to indicate a serial number of a starting PRB for a first hop transmission of the terminal device in the first BWP.

In some embodiments, the frequency domain other than the first BWP includes a second BWP.

In some embodiments, the second BWP is any one of:

any one of BWPs configured by a network device for the terminal device other than the first BWP;

any one of a plurality of BWPs for data transmission configured by the network device for the terminal device;

one BWP of a subset of a set of BWPs, the set of BWPs including a plurality of BWPs configured by the network device for the terminal device for data transmission; or

one BWP of a set of BWPs configured by the network device for the terminal device for data transmission in the manner of frequency hopping.

In some embodiments, the transmission unit 501 is further configured to configure an index of the second BWP for the terminal device.

In some embodiments, the index of the second BWP is carried in at least one of: the RRC signaling, the MACCE, or the DCI.

In some embodiments, the index of the second BWP and the index of the first BWP satisfy a first corresponding relationship.

In some embodiments, the second BWP is a virtual mirror BWP having a second corresponding relationship with the first BWP.

The virtual image BWP is used for data transmission in the manner of frequency hopping.

In some embodiments, the virtual image BWP has a different frequency domain than the first BWP.

In some embodiments, the transmission unit 501 is further configured to configure the virtual image BWP for the terminal device.

Embodiments of the present disclosure further provide a terminal device. The terminal device includes a processor and a memory configured to store a computer program executable on the processor. Herein the processor is configured to perform the steps of the above mentioned method for frequency hopping performed by the terminal device when executing the computer program.

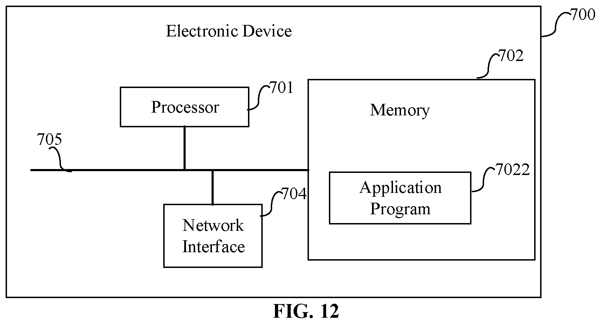

FIG. 12 is a schematic structure diagram of the hardware of an electronic device (terminal device or network device) according to an embodiment of the disclosure. The electronic device 700 includes: at least one processor 701, a memory 702 and at least one network interface 704. The respective components of the electronic device 700 are coupled together via the bus system 705. It is to be understood that the bus system 705 is for implementing the connection and communication among the components. In addition to the data bus, the bus system 705 further includes a power bus, a control bus, and a status signal bus. However, for clarity, the various buses are marked as the bus system 705 in FIG. 12.

It is to be understood that the memory 702 may be a volatile memory or a nonvolatile memory, or may include both the volatile memory and nonvolatile memory. The nonvolatile memory may be a ROM, a Programmable Read-Only Memory (PROM), an Erasable Programmable Read-Only Memory (EPROM), an Electrically Erasable Programmable Read-Only Memory (EEPROM), a Ferromagnetic Random Access Memory (FRAM), a Flash Memory, a magnetic surface storage, a Compact Disk (CD), or a Compact Disc Read-Only Memory (CD-ROM). The magnetic surface storage may be a disk storage or a magnetic tape storage. The volatile memory may be a Random Access Memory (RAM), and is used as an external high-speed cache. Exemplarily but unrestrictively, RAMs in various forms may be adopted, such as a Static Random Access Memory (SRAM), a Synchronous Static Random Access Memory (SSRAM), a Dynamic Random Access Memory (DRAM), a Synchronous Dynamic Random Access Memory (SDRAM), a Double Data Rate SDRAM (DDRSDRAM), an Enhanced SDRAM (ESDRAM), a SyncLink DRAM (SLDRAM) and a Direct Rambus RAM (DRRAM). The memory 702 described in the embodiments of the disclosure is intended to include, but not limited to, memories of such types and any other proper types.

The memory 702 in the embodiments of the disclosure is to store various types of data so as to support the operation of the electronic device 700. Exemplarily, such data includes any computer programs for executing in the electronic device 700, such as an application program 7022. The program for implementing the methods of the embodiments of the disclosure may be included in the application program 7022.

The methods disclosed in the above-mentioned embodiments of the disclosure may be applied to the processor 701 or implemented by the processor 701. The processor 701 may be an integrated circuit with signal processing capabilities. During implementing the foregoing methods, the steps of the foregoing methods can be accomplished by integrated logic circuits in the form of hardware or by instructions in the form of software in the processor 701. The foregoing processor 701 may be a general-purpose processor, a Digital Signal Processor (DSP), or another programmable logic device, a discrete gate, a transistor logic device, a discrete hardware component, or the like. The processor 701 may implement or perform the various methods, steps, and logical block diagrams described in the embodiments of the disclosure. The general-purpose processor may be a microprocessor, any conventional processors or the like. The steps of the methods described in combination with the embodiments of the disclosure may be directly performed by the hardware decoding processor or be performed by the combination of hardware and software modules in the decoding processor. The software modules may be located in a storage medium in the memory 702. The processor 701 reads the information in the memory 702, and implements the steps of the foregoing methods in combination with its hardware.

In an exemplary embodiment, the electronic device 700 may be implemented through one or more Application Specific Integrated Circuit (ASIC), DSP, Programmable Logic Device (PLD), Complex Programmable Logic Device (CPLD), FPGA, general-purpose processor, controller, MCU, MPU, or other electronic components, to perform the aforementioned methods.

The embodiment of the disclosure also provides a storage medium for storing a computer program.

Optionally, the storage medium may be applied to the User Equipment (UE) in the embodiments of the disclosure, and the computer program causes the computer to perform the corresponding processes in each of the methods in the embodiments of the disclosure, which are not elaborated herein for the sake of simplicity.

Embodiments of the present application further provide a chip. The chip includes a processor configured to call and execute a computer program from a memory such that a device in which the chip is arranged performs the above mentioned method for frequency hopping.

Embodiments of the present disclosure further provide a computer program product including. The computer program product includes a computer program instruction, herein the computer program instruction enables a computer to execute the above mentioned method for frequency hopping.

Embodiments of the present disclosure further provide a computer program that enables a computer to execute the above mentioned method for frequency hopping.

The disclosure is described with reference to flowcharts and/or block diagrams of the methods, devices (systems), and computer program products according to the embodiments of the disclosure. It is to be understood that each of the processes and/or blocks in the flowcharts and/or block diagrams, and the combination of the processes and/or blocks in the flowcharts and/or block diagrams may be implemented through computer program instructions. The computer program instructions may be provided to the processor of a general-purpose computer, a special-purpose computer, an embedded processor, or other programmable data processing devices to produce a machine, such that the instructions executed by the processor of the computer or of other programmable data processing devices can produce a module for implementing the functions specified in one or more processes of the flowchart and/or in one or more blocks of the block diagram.

The computer program instructions may be also stored in a computer-readable memory that can direct a computer or other programmable data processing devices to operate in a particular manner, such that the instructions stored in the computer-readable memory produce a manufacture including the instruction device. The instruction device implements the functions specified in one or more processes of the flowcharts and/or in one or more blocks of the block diagrams.

The computer program instructions may be also loaded into a computer or other programmable data processing devices, such that a series of operation steps are performed on the computer or other programmable devices to produce the computer-implemented processes, and further the instructions executed on the computer or other programmable devices provide steps for implementing the functions specified in one or more processes of the flowcharts and/or in one or more blocks of the block diagrams.

It is to be understood that the terms "system" and "network" in the present disclosure may be used interchangeably. The term "and/or" in the present disclosure is merely an association relationship describing an association object, and indicates that there may be three types of relationships. For example, A and/or B may indicate three cases that there is only A, there are both A and B, and there is only B. Further, the character "/" in the present disclosure generally indicates an "or" relationship between the previous association object and latter association object.

The above are only preferred embodiments of the disclosure and are not intended to limit the scope of protection of the disclosure. Any modifications, replacements or improvements within the spirit and principles of the disclosure shall fall within the scope of protection of the disclosure.

**Claims**

1. A method for frequency hopping, comprising:

   receiving, by a terminal device, indication information; and
   transmitting based on the indication information, by the terminal device, data through an active first bandwidth portion (BWP) and a frequency domain other than the first BWP in a manner of frequency hopping.

2. The method of claim 1, wherein the indication information is used to indicate a serial number of a starting physical resource block (PRB) for a first hop transmission of the terminal device in the first BWP.

3. The method of claim 1 or 2, wherein the frequency domain other than the first BWP comprises a second BWP.

4. The method of claim 3, wherein the second BWP is any one of:

   any one of BWPs configured by a network device for the terminal device other than the first BWP;
   any one of a plurality of BWPs for data transmission configured by the network device for the terminal device;
   one BWP of a subset of a set of BWPs, the set of BWPs comprising a plurality of BWPs for data transmission configured by the network device for the terminal device; or
   one BWP of a set of BWPs configured by the network device for the terminal device for data transmission in the manner of frequency hopping.

5. The method of claim 3 or 4, wherein an index of the second BWP is preconfigured by the network device.

6. The method of claim 5, wherein the index of the second BWP is carried in at least one of:
   a Radio Resource Control (RRC) signaling, a Media Access Control Control Element (MAC CE), or a Downlink Control Information (DCI).

7. The method of claim 5 or 6, wherein the index of the second BWP and an index of the first BWP satisfy a first corresponding relationship.

8. The method of claim 3, wherein the second BWP is a virtual mirror BWP having a second corresponding relationship with the first BWP; and
   the virtual image BWP is used for data transmission in the manner of frequency hopping.

9. The method of claim 8, wherein the virtual image BWP has a different frequency domain than the first BWP.

10. The method of claim 8 or 9, wherein the virtual image BWP is configured by a network device.

11. The method of any one of claims 3-10, wherein the terminal device performs a second hop transmission in the second BWP.

12. The method of claim 11, wherein a serial number of a starting PRB for the second hop transmission in the second BWP is:
    a value obtained by performing a modulo operation on a number of PRBs comprised in the second BWP with a sum of a serial number of the starting PRB for the first hop transmission of the terminal device in the first BWP and a first frequency domain offset.

13. The method of claim 12, wherein a serial number of the starting PRB for the second hop transmission in the second BWP is:
    the serial number of the starting PRB for the first hop transmission of the terminal device in the first BWP.

14. The method of claim 1 or 2, wherein the terminal device performs a second hop transmission in the frequency domain other than the first BWP.

15. The method of claim 14, wherein a serial number of a starting PRB for the second hop transmission in the frequency domain other than the first BWP is:
    a sum of a serial number of a starting PRB for a first hop transmission of the terminal device in the first BWP and a second frequency domain offset.

16. The method of claim 14, wherein the starting PRB for the second hop transmission is:
    a PRB corresponding to a value obtained by performing modulo operation on a number of PRBs within a carrier with a sum of the starting PRB for the first hop transmission of the terminal device in the first BWP and the second frequency domain offset.

**17.** The method of claim 14, wherein the starting PRB for the second hop transmission is:
a PRB corresponding to a sum of:

a value, which is obtained by performing modulo operation on a number of PRBs comprised in the first BWP with a sum of the starting PRB for the first hop transmission of the terminal device in the first BWP and a third frequency domain offset; and
a fourth frequency domain offset.

**18.** The method of claim 14, wherein the starting PRB for the second hop transmission is:
a PRB corresponding to a value obtained by performing modulo operation on a number of PRBs within a carrier with a sum of:

a value, which is obtained by performing modulo operation on a number of PRBs comprised in the first BWP with a sum of the starting PRB for the first hop transmission of the terminal device in the first BWP and a third frequency domain offset; and
a fourth frequency domain offset.

**19.** The method of claim 11 or 14, wherein a serial number of the starting PRB for the second hop transmission in a transmission slot corresponding to the second BWP in the second BWP is:

a value obtained by performing a modulo operation on a number of PRBs comprised in the second BWP with a sum of a serial number of a starting PRB for the first hop transmission of the terminal device in the first BWP and a fifth frequency domain offset,
wherein a value of performing modulo operation on 2 with a slot serial number of a slot being transmitted currently is 1.

**20.** The method of claim 11 or 14, wherein a serial number of the starting PRB for the second hop transmission in a transmission slot corresponding to the second BWP in the second BWP is:

a serial number of a starting PRB for the first hop transmission of the terminal device in the first BWP,
wherein a value of performing modulo operation on 2 with a slot serial number of a slot being transmitted currently is 1.

**21.** The method of any one of claims 1-20, wherein at least one symbol is reserved between a first hop transmission and a second hop transmission with that the terminal device performs data transmission in the manner of frequency hopping, and
the at least one symbol is used for frequency modulation of the terminal device.

**22.** The method of claim 21, wherein the at least one symbol is within symbols of the first hop transmission; or
the at least one symbol is within symbols of the second hop transmission.

**23.** The method of claim 21, wherein when a number of reserved symbols is greater than one, both the symbols of the first hop transmission and the symbols of the second hop transmission comprise the reserved symbols.

**24.** The method of any one of claims 21-23, wherein a number of the at least one symbol is at least one of:
a predefined number, a number configured by the network device, or a number corresponding to a capability of the terminal device.

**25.** The method of any one of claims 1-24, wherein the indication information is carried in at least one of:
a Radio Resource Control (RRC) signaling, a Media Access Control Control Element (MAC CE), or a Downlink Control Information (DCI).

**26.** A method for frequency hopping, comprising:
transmitting, by a network device, indication information, wherein the indication information is used for a terminal device to transmit data through an active first bandwidth portion (BWP) and a frequency domain other than the first BWP in a manner of frequency hopping.

**27.** The method of claim 26, wherein the indication information is used to indicate a serial number of a starting physical resource block (PRB) for a first hop transmission of the terminal device in the first BWP.

28. The method of claim 26 or 27, wherein the frequency domain other than the first BWP comprises a second BWP.

29. The method of claim 28, wherein the second BWP is any one of:

    any one of BWPs configured by a network device for the terminal device other than the first BWP;
    any one of a plurality of BWPs for data transmission configured by the network device for the terminal device;
    one BWP of a subset of a set of BWPs, the set of BWPs comprising a plurality of BWPs for data transmission configured by the network device for the terminal device; or
    one BWP of a set of BWPs configured by the network device for the terminal device for data transmission in the manner of frequency hopping.

30. The method of claim 28 or 29, wherein the method further comprises:
    configuring, by the network device, an index of the second BWP for the terminal device.

31. The method of claim 30, wherein the index of the second BWP is carried in at least one of:
    a Radio Resource Control (RRC) signaling, a Media Access Control Control Element (MAC CE), or a Downlink Control Information (DCI).

32. The method of claim 30 or 31, wherein the index of the second BWP and an index of the first BWP satisfy a first corresponding relationship.

33. The method of claim 28, wherein the second BWP is a virtual mirror BWP having a second corresponding relationship with the first BWP; and
    the virtual image BWP is used for data transmission in the manner of frequency hopping.

34. The method of claim 33, wherein the virtual image BWP has a different frequency domain than the first BWP.

35. The method of claim 33 or 34, wherein the method further comprises:
    configuring, by the network device, the virtual image BWP for the terminal device.

36. The method of any one of claims 26-35, wherein the indication information is carried in at least one of:
    a Radio Resource Control (RRC) signaling, a Media Access Control Control Element (MAC CE), or a Downlink Control Information (DCI).

37. A terminal device, comprising:

    a receiving unit, configured to receive indication information;
    a processing unit, configured to transmit data through an active first bandwidth portion (BWP) and a frequency domain other than the first BWP in a manner of frequency hopping.

38. The terminal device of claim 37, wherein the indication information is used to indicate a serial number of a starting physical resource block (PRB) for a first hop transmission of the terminal device in the first BWP.

39. The terminal device of claim 37 or 38, wherein the frequency domain other than the first BWP comprises a second BWP.

40. The terminal device of claim 39, wherein the second BWP is any one of:

    any one of BWPs configured by a network device for the terminal device other than the first BWP;
    any one of a plurality of BWPs for data transmission configured by the network device for the terminal device;
    one BWP of a subset of a set of BWPs, the set of BWPs comprising a plurality of BWPs for data transmission configured by the network device for the terminal device; or
    one BWP of a set of BWPs configured by the network device for the terminal device for data transmission in the manner of frequency hopping.

41. The terminal device of claim 39 or 40, wherein an index of the second BWP is preconfigured by the network device.

42. The terminal device of claim 41, wherein the index of the second BWP is carried in at least one of:
a Radio Resource Control (RRC) signaling, a Media Access Control Control Element (MAC CE), or a Downlink Control Information (DCI).

43. The terminal device of claim 41 or 42, wherein the index of the second BWP and an index of the first BWP satisfy a first corresponding relationship.

44. The terminal device of claim 39, wherein the second BWP is a virtual mirror BWP having a second corresponding relationship with the first BWP; and
the virtual image BWP is used for data transmission in the manner of frequency hopping.

45. The terminal device of claim 44, wherein the virtual image BWP has a different frequency domain than the first BWP.

46. The terminal device of claim 44 or 45, wherein the virtual image BWP is configured by a network device.

47. The terminal device of any one of claims 39-46, wherein the processing unit is configured to perform a second hop transmission in the second BWP.

48. The terminal device of claim 47, wherein a serial number of a starting PRB for the second hop transmission in the second BWP is:
a value obtained by performing a modulo operation on a number of PRBs comprised in the second BWP with a sum of a serial number of the starting PRB for the first hop transmission of the terminal device in the first BWP and a first frequency domain offset.

49. The terminal device of claim 48, wherein a serial number of the starting PRB for the second hop transmission in the second BWP is:
the serial number of the starting PRB for the first hop transmission of the terminal device in the first BWP.

50. The terminal device of claim 37 or 38, wherein the processing unit is configured to perform a second hop transmission in the frequency domain other than the first BWP.

51. The terminal device of claim 50, wherein a serial number of a starting PRB for the second hop transmission in the frequency domain other than the first BWP is:
a sum of a serial number of a starting PRB for a first hop transmission of the terminal device in the first BWP and a second frequency domain offset.

52. The terminal device of claim 50, wherein the starting PRB for the second hop transmission is:
a PRB corresponding to a value obtained by performing modulo operation on a number of PRBs within a carrier with a sum of the starting PRB for the first hop transmission of the terminal device in the first BWP and the second frequency domain offset.

53. The terminal device of claim 50, wherein the starting PRB for the second hop transmission is:
a PRB corresponding to a sum of:

a value, which is obtained by performing modulo operation on a number of PRBs comprised in the first BWP with a sum of the starting PRB for the first hop transmission of the terminal device in the first BWP and a third frequency domain offset; and
a fourth frequency domain offset.

54. The terminal device of claim 50, wherein the starting PRB for the second hop transmission is:
a PRB corresponding to a value obtained by performing modulo operation on a number of PRBs within a carrier with a sum of:

a value, which is obtained by performing modulo operation on a number of PRBs comprised in the first BWP with a sum of the starting PRB for the first hop transmission of the terminal device in the first BWP and a third frequency domain offset; and
a fourth frequency domain offset.

55. The terminal device of claim 47 or 50, wherein a serial number of the starting PRB for the second hop transmission in a transmission slot corresponding to the second BWP in the second BWP is:

a value obtained by performing a modulo operation on a number of PRBs comprised in the second BWP with a sum of a serial number of a starting PRB for the first hop transmission of the terminal device in the first BWP and a fifth frequency domain offset,
wherein a value of performing modulo operation on 2 with a slot serial number of a slot being transmitted currently is 1.

56. The terminal device of claim 47 or 50, wherein a serial number of the starting PRB for the second hop transmission in a transmission slot corresponding to the second BWP in the second BWP is:

a serial number of a starting PRB for the first hop transmission of the terminal device in the first BWP,
a value of performing modulo operation on 2 with a slot serial number of a slot being transmitted currently is 1.

57. The terminal device of any one of claims 37-56, wherein at least one symbol is reserved between a first hop transmission and a second hop transmission with that the terminal device performs data transmission in the manner of frequency hopping, and
the at least one symbol is used for frequency modulation of the terminal device.

58. The terminal device of claim 57, wherein the at least one symbol is within symbols of the first hop transmission; or the at least one symbol is within symbols of the second hop transmission.

59. The terminal device of claim 57, wherein when a number of reserved symbols is greater than one, both the symbols of the first hop transmission and the symbols of the second hop transmission comprise the reserved symbols.

60. The terminal device of any one of claims 57-59, wherein a number of the at least one symbol is obtained by at least one of:
a predefined number, a number configured by the network device, or a number corresponding to a capability of the terminal device.

61. The terminal device of any one of claims 37-60, wherein the indication information is carried in at least one of:
a Radio Resource Control (RRC) signaling, a Media Access Control Control Element (MAC CE), or a Downlink Control Information (DCI).

62. A network device, comprising:
a transmission unit, configured to transmit indication information, wherein the indication information is used for a terminal device to transmit data through an active first bandwidth portion (BWP) and a frequency domain other than the first BWP in a manner of frequency hopping.

63. The network device of claim 62, wherein the indication information is used to indicate a serial number of a starting physical resource block (PRB) for a first hop transmission of the terminal device in the first BWP.

64. The network device of claim 62 or 63, wherein the frequency domain other than the first BWP comprises a second BWP.

65. The network device of claim 64, wherein the second BWP is any one of:

any one of BWPs configured by a network device for the terminal device other than the first BWP;
any one of a plurality of BWPs for data transmission configured by the network device for the terminal device;
one BWP of a subset of a set of BWPs, the set of BWPs comprising a plurality of BWPs for data transmission configured by the network device for the terminal device; or
one BWP of a set of BWPs configured by the network device for the terminal device for data transmission in the manner of frequency hopping.

66. The network device of claim 64 or 65, wherein the transmission unit is further configured to:
configure an index of the second BWP for the terminal device.

**67.** The network device of claim 66, wherein the index of the second BWP is carried in at least one of:
a Radio Resource Control (RRC) signaling, a Media Access Control Control Element (MAC CE), or a Downlink Control Information (DCI).

**68.** The network device of claim 66 or 67, wherein the index of the second BWP and an index of the first BWP satisfy a first corresponding relationship.

**69.** The network device of claim 64, wherein the second BWP is a virtual mirror BWP having a second corresponding relationship with the first BWP; and
the virtual image BWP is used for data transmission in the manner of frequency hopping.

**70.** The network device of claim 69, wherein the virtual image BWP has a different frequency domain than the first BWP.

**71.** The network device of claim 69 or 70, wherein the transmission unit is further configured to:
configure the virtual image BWP for the terminal device.

**72.** The method of any one of claims 62-71, wherein the indication information is carried in at least one of:
an RRC signaling, an MAC CE, or a DCI.

**73.** A terminal device, comprising a processor and a memory configured to store a computer program executable on the processor, wherein
the processor is configured to perform steps of the method for frequency hopping of any one of claims 1-25 when executing the computer program.

**74.** A terminal device, comprising a processor and a memory configured to store a computer program executable on the processor, wherein
the processor is configured to perform steps of the method for frequency hopping of any one of claims 26-36 when executing the computer program.

**75.** A chip, comprising a processor configured to call and execute a computer program from a memory such that a device in which the chip is arranged performs the method for frequency hopping of any one of claims 1-25.

**76.** A chip, comprising a processor configured to call and execute a computer program from a memory such that a device in which the chip is arranged performs the method for frequency hopping of any one of claims 26-36.

**77.** A storage medium having stored an executable program that, when executed by a processor, causes the processor to perform the method for frequency hopping of any one of claims 1-25.

**78.** A storage medium having stored an executable program that, when executed by a processor, causes the processor to perform the method for frequency hopping of any one of claims 26-36.

**79.** A computer program product, comprising a computer program instruction, wherein the computer program instruction enables a computer to execute the method of any one of claims 1-25.

**80.** A computer program product, comprising a computer program instruction, wherein the computer program instruction enables a computer to execute the method of any one of claims 26-36.

**81.** A computer program, enabling a computer to execute the method of any one of claims 1-25.

**82.** A computer program, enabling a computer to execute the method of any one of claims 26-36.

**FIG. 1**

**FIG. 2**

| The terminal device receives the indication information | S201 |
| --- | --- |

| The terminal device transmits data through an active first BWP and a frequency domain other than the first BWP in a manner of frequency hopping based on the indication information | S202 |
| --- | --- |

**FIG. 3**

**FIG. 4**

**FIG. 5**

**FIG. 6**

**FIG. 7**

f

Second BWP

RBstart

First BWP

RBstart

At least
one
symbol

t

**FIG. 8**

The network device configures the virtual image BWP for the
terminal device

S300

The network device transmits indication information

S301

**FIG. 9**

Terminal Device 400

Receiving Unit 401

Processing Unit 402

**FIG. 10**

Network Device 500

Transmission Unit 501

**FIG. 11**

**FIG. 12**

## INTERNATIONAL SEARCH REPORT

International application No.

**PCT/CN2020/073319**

### A. CLASSIFICATION OF SUBJECT MATTER

H04L 29/06(2006.01)i

According to International Patent Classification (IPC) or to both national classification and IPC

### B. FIELDS SEARCHED

Minimum documentation searched (classification system followed by classification symbols)

H04L; H04W

Documentation searched other than minimum documentation to the extent that such documents are included in the fields searched

Electronic data base consulted during the international search (name of data base and, where practicable, search terms used)

CNPAT, CNKI, WPI, EPODOC, 3GPP: 跳频, hopping, BWP, inter BWP, 激活, active, PRB, 索引, index, 号, SN, 偏移, offset, RRC, MAC CE, DCI

### C. DOCUMENTS CONSIDERED TO BE RELEVANT

| Category* | Citation of document, with indication, where appropriate, of the relevant passages | Relevant to claim No. |
|---|---|---|
| X | US 2019036665 A1 (KT CORPORATION) 31 January 2019 (2019-01-31) description, paragraphs 45-120, figure 5 | 1-82 |
| X | PANASONIC. "On PUSCH enhancements for NR URLLC" *3GPP TSG RAN WG1 Meeting #95 R1-1813133*, 16 November 2018 (2018-11-16), section 2 | 1-82 |
| A | WO 2019095834 A1 (HUAWEI TECHNOLOGIES CO., LTD.) 23 May 2019 (2019-05-23) entire document | 1-82 |
| A | CN 108521850 A (BEIJING XIAOMI MOBILE SOFTWARE CO., LTD.) 11 September 2018 (2018-09-11) entire document | 1-82 |
| A | ZTE et al. "Remaining Issues for UL Data Transmission Procedure" *3GPP TSG RAN WG1 Meeting #92bis R1-1803797*, 20 April 2018 (2018-04-20), entire document | 1-82 |

☐ Further documents are listed in the continuation of Box C.　　☑ See patent family annex.

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **24 September 2020** | **28 October 2020** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**
Information on patent family members

| International application No. |
| --- |
| **PCT/CN2020/073319** |

| Patent document cited in search report | | | Publication date (day/month/year) | Patent family member(s) | | | Publication date (day/month/year) |
| --- | --- | --- | --- | --- | --- | --- | --- |
| US | 2019036665 | A1 | 31 January 2019 | CN | 109309558 | A | 05 February 2019 |
| WO | 2019095834 | A1 | 23 May 2019 | CN | 109803407 | A | 24 May 2019 |
| CN | 108521850 | A | 11 September 2018 | KR | 20200071758 | A | 19 June 2020 |
| | | | | WO | 2019095223 | A1 | 23 May 2019 |

Form PCT/ISA/210 (patent family annex) (January 2015)